# EUROPEAN PATENT APPLICATION

(11) **EP 4 321 965 A1**
(43) Date of publication of application: **14.02.2024**
(21) Application number: 23179115.3
(22) Date of filing: 14.06.2023
(51) Int. Cl.: G06F 1/16, H01R 13/24, H01R 13/631, H01R 13/73

(54) **CONNECTING DEVICE**

(30) Priority: 09.08.2022 TW 111208600 U
(71) Applicant: Pegatron Corporation, Taipei City 112 (TW)
(72) Inventor: HUANG, Ching-Yen, 112 Taipei City (TW); HSU, Hsiang-Chi, 112 Taipei City (TW); TANG, Yi-Chun, 112 Taipei City (TW); WANG, Hui-Chen, 112 Taipei City (TW)
(74) Representative: Becker, Eberhard

(57) **Abstract**

A connecting device including a housing, a connector and an elastic element is provided. The housing comprises a connector base including a bottom plate and a side wall, the bottom plate and the side wall jointly surround a space. The connector is disposed at the connector base and located in the space. The connector includes a positioning element and a plug terminal element connected to the positioning element. The positioning element including a limit portion is connected with the plug terminal element. The elastic element abuts between the plug terminal element and the bottom plate. When the plug terminal element is moved to a skewed position by an external force, the limit portion is moved away from the bottom plate. When the external force is disappeared, the limit portion returns to abut against the bottom plate, such that the plug element is in an upright position.

## Description

### BACKGROUND

### Technical Field

The invention relates to a connecting device, and particularly relates to a connecting device with a movable connector.

### Description of Related Art

A connector of a conventional connecting device is a fixed connector, and a portable electronic device (for example, a mobile phone) is needed to be plugged into the connector at a specific angle, or the portable electronic device is unplugged from the connector at the specific angle. If a plugging/unplugging angle is incorrect, the portable electronic device cannot be connected to the connector or cannot be pulled out from the connector, which will affect a convenience of using the connecting device. In addition, when the plugging/unplugging angle is incorrect, the connector is ease to be damaged to cause failure of the connecting device. Therefore, how to make the connector of the connecting device to be not limited by the specific plugging/unplugging angle is an urgent issue to be solved in this field.

### SUMMARY

The invention is directed to a connecting device with a movable connector, wherein a portable electronic device is adapted to be plugged to the connecting device at various angles without being limited to a specific angle.

The invention provides a connecting device including a housing, a connector and an elastic element. The housing includes a connector base, and the connector base includes a bottom plate and a side wall connected to the bottom plate. The bottom plate and the side wall jointly surround a space, and the bottom plate includes a through hole. The connector is movably disposed at the connector base, and is partially located in the space. The connector includes a positioning element and a plug terminal element linked to the positioning element. The positioning element passes through the through hole and is connected to the plug terminal element. The plug terminal element is exposed from the connector base, and the positioning element includes a limit portion. The bottom plate is located between the limit portion and the plug terminal element, a size of the limit portion is larger than a size of the corresponding through hole, and a gap is formed between the plug terminal element and the side wall. The elastic element abuts between the plug terminal element and the bottom plate. When the plug terminal element is pushed by an external force and moved to a skewed position relative to the bottom plate, an interval of the gap changes, the limit portion is moved away from the bottom plate, and the elastic element is deformed to accumulate an elastic force. When the external force is disappeared, the elastic element restores, the limit portion returns to abut against the bottom plate, and the plug terminal element is located at an upright position relative to the bottom plate.

Based on the above description, the connector of the connecting device of the invention is movably disposed on the connector base. A gap is formed between the plug terminal element of the connector and the side wall of the connector base, and the plug terminal element may be moved relative to the side wall. When no external force is applied, the limit portion abuts against the bottom plate in a normal state, and the plug terminal element is in the upright position. When the plug terminal element is pushed by the external force and is in the skewed position, the interval of the gap changes, and the elastic element is deformed to accumulate elastic force. When the external force is disappeared, the elastic element restores, the limit portion abuts against the bottom plate, and the plug terminal element returns to the upright position. In this way, the plug terminal element may withstand the external forces from various directions or angles, and the portable electronic device may be plugged into the connecting device at various angles without being limited to a specific angle.

To make the aforementioned more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a connecting device according to an embodiment of the invention.
FIG. 2 is a cross-sectional view of the connecting device along a section plane P1 of FIG. 1.
FIG. 3 is another cross-sectional view of the connecting device along a section plane P2 of FIG. 1.
FIG. 4 is an exploded view of the connecting device of FIG. 1 in another viewing angle.
FIG. 5 is an exploded view of some components of the connecting device of FIG. 4 in yet another viewing angle.
FIG. 6 is a schematic diagram of some components of the connecting device of FIG. 4 after being assembled.
FIG. 7 to FIG. 10 respectively illustrate a plug terminal element of FIG. 1 in different skewed positions.
FIG. 11 to FIG. 13 illustrate a plugging process of a portable electronic device and the connecting device of FIG. 1.

### DESCRIPTION OF THE EMBODIMENTS

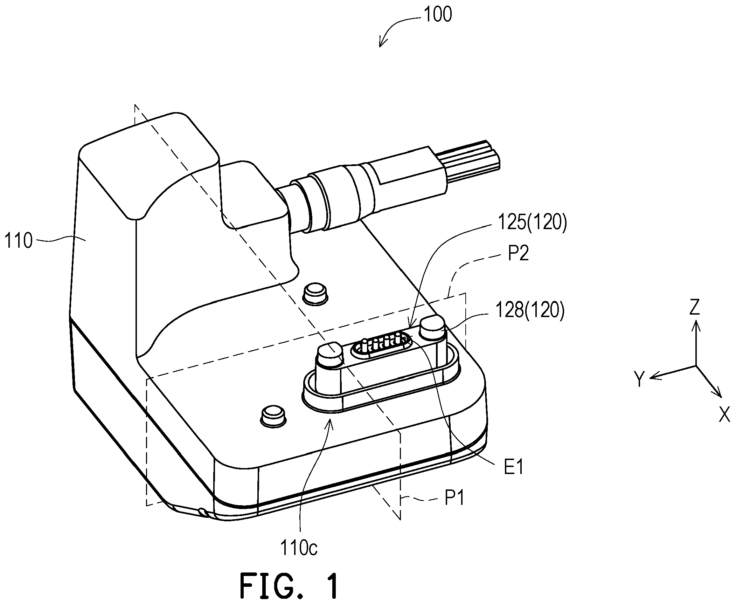

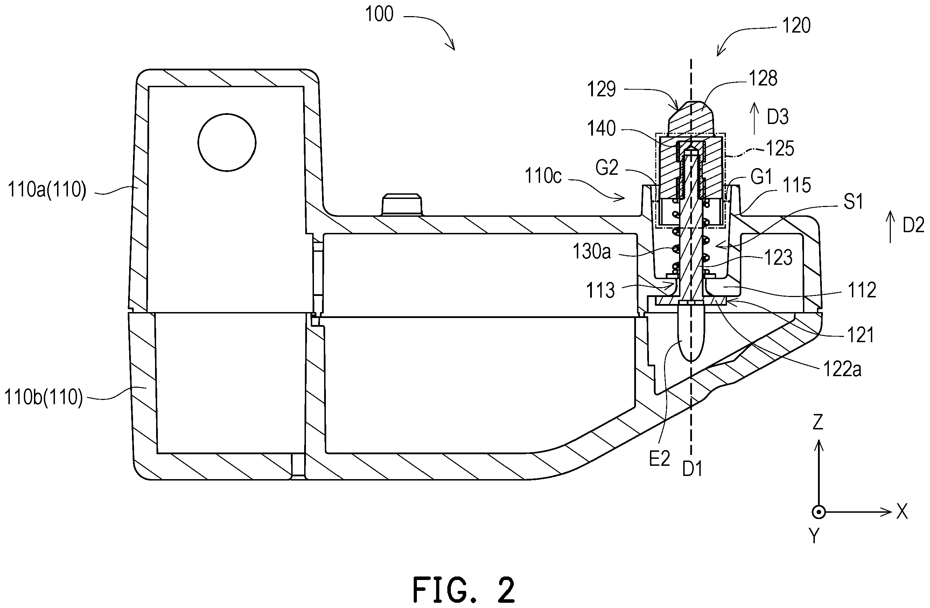

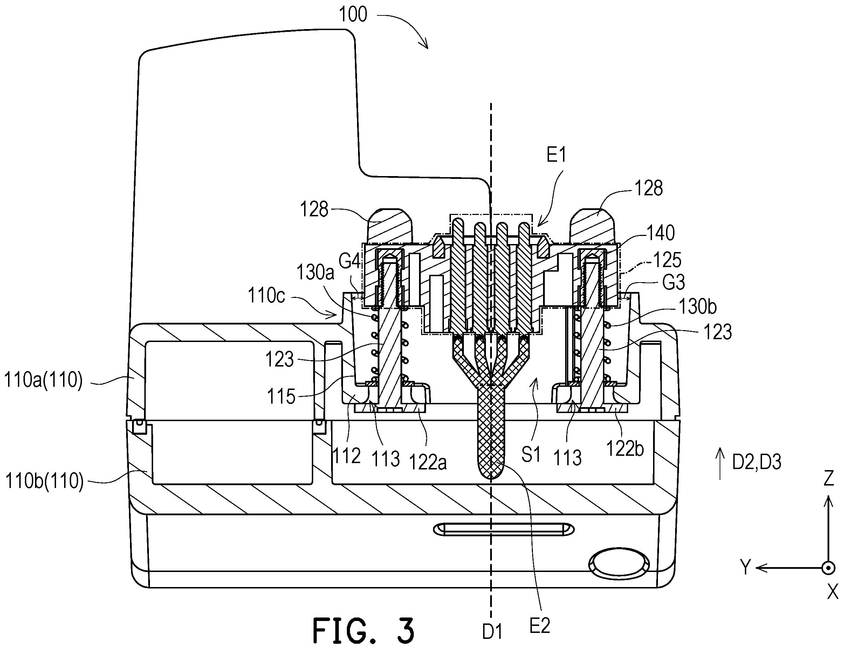

FIG. 1 is a schematic diagram of a connecting device according to an embodiment of the invention. FIG. 2 is a cross-sectional view of the connecting device along a section plane P1 of FIG. 1. FIG. 3 is another cross-sectional view of the connecting device along a section plane P2 of FIG. 1. Some components are omitted here and Cartesian coordinates X-Y-Z are provided to facilitate component description.

Referring to FIG. 1 to FIG. 3, the connecting device 100 includes a housing 110 and a connector 120. The housing 110 includes a connector base 110c. The connector 120 is movably disposed on the connector base 110c, and a plug terminal element 125 (as shown in FIG. 2) of the connector 120 is exposed from the connector base 110c. The connector 120 is adapted for connecting with a portable electronic device (for example, a mobile phone). The connecting device 100 of the embodiment may be used in a vehicle, and a digital-to-analog converter may be included to convert the signals, but the invention is not limited thereto. FIGs. 1 to 3 illustrate that the connecting device 100 is in a normal state and the connector is not connected to a portable electronic device.

As shown in FIG. 2 and FIG. 3, the housing 110 includes an upper housing 110a and a lower housing 110b, and the connector base 110c is disposed on the upper housing 110a. The connector base 110c includes a bottom plate 112 and a side wall 115 connected to the bottom plate 112. The bottom plate 112 and the side wall 115 jointly surround a space S1. The bottom plate 112 includes a through hole 113. The connector 120 includes a positioning element 121 and a plug terminal element 125, and the plug terminal element 125 is partially located in the space S1. The positioning member 121 includes a limit portion 122a and a rod body 123, and the rod body 123 extends from the limit portion 122a.

The bottom plate 112 is located between the limit portion 122a and the plug terminal element 125, and the limit portion 122a has a size larger than that of the corresponding through hole 113 and cannot move into the space S1. The rod body 123 of the positioning element 121 passes through the through hole 113 of the bottom plate 112 and is connected to the plug terminal element 125, so that the plug terminal element 125 is linked to the positioning element 121 (i.e., the limit portion 122a of the positioning element 121). An elastic element 130a of the connecting device 100 sleeves on the rod body 123 and abuts between the plug terminal element 125 and the bottom plate 112.

Since the size of the through hole 113 is greater than a size of the rod body 123, and a gap is formed between the plug terminal element 125 and the side wall 115, the connector 120 may be shifted in a front-rear direction (i.e., an X-axis) and a left-right direction (i.e., a Y-axis).

As shown in FIG. 2 and FIG. 3, the plug terminal element 125 is not pushed by an external force, the limit portion 122a of the positioning element 121 abuts against the bottom plate 112 in the normal state, and the plug terminal element 125 located at an upright position relative to the bottom plate 112. The bottom plate 112 is parallel to an X-Y plane. A central axis D1 of the connector 120 is parallel to a normal direction D2 of the bottom plate 112, and the normal direction D2 is parallel to a Z axis. As shown in Fig. 2, the gaps G1 and G2 are formed between the plug terminal element 125 and the side wall 115 of the connector base 110c in the X-axis direction. As shown in Fig. 3, the gaps G3 and G4 are formed between the plug terminal element 125 and the side wall 115 in the Y-axis direction.

As shown in FIG. 3, the gaps G1, G2, G3, G4 are greater than zero and less than 5 mm. The gap G1 is equal to the gap G2, and the gap G3 is equal to the gap G4. The gap G3 is, for example, 1 mm. The elastic elements 130a, 130b are not deformed.

Structural features of the plug terminal element 125 and the positioning element 121 and a connection method of the above two elements will be described in detail below.

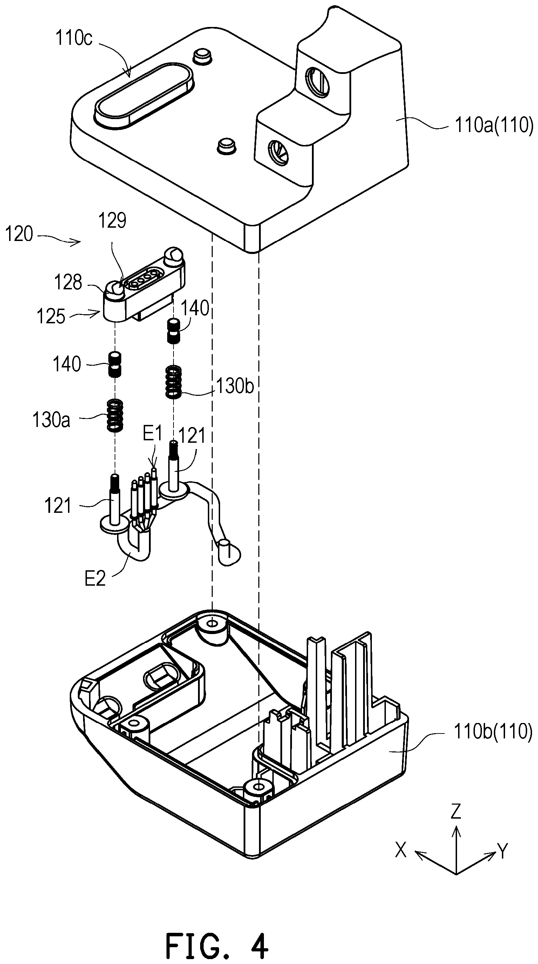

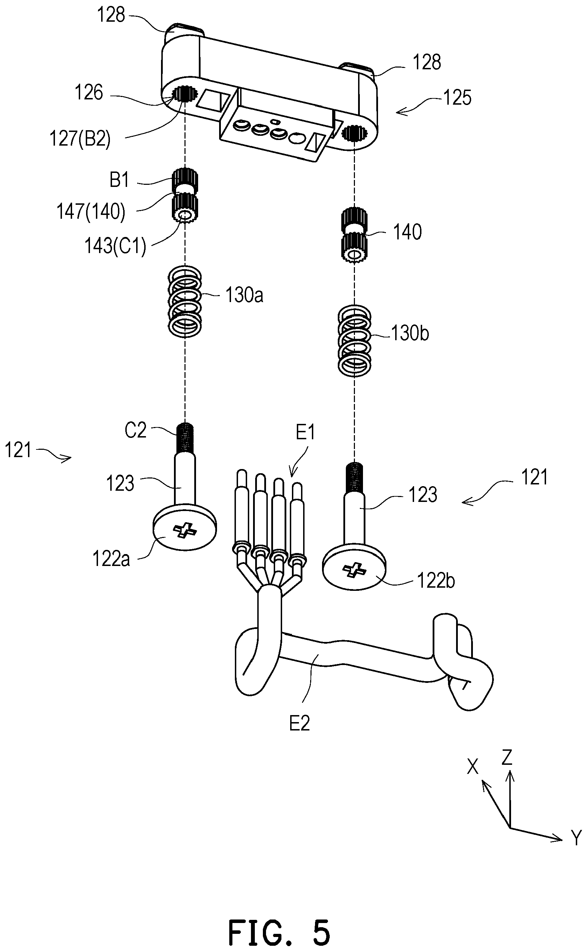

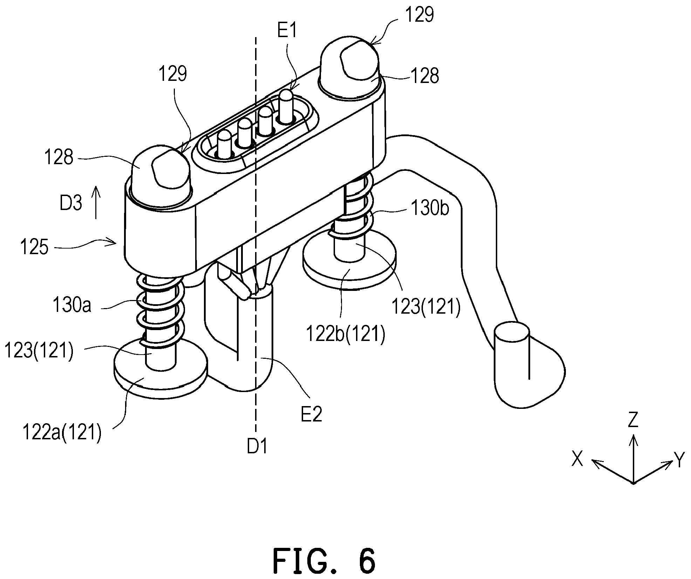

FIG. 4 is an exploded view of the connecting device of FIG. 1 in another viewing angle. FIG. 5 is an exploded view of some components of the connecting device of FIG. 4 in yet another viewing angle. FIG. 6 is a schematic diagram of some components of the connecting device of FIG. 4 after being assembled. Referring to FIG. 4 to FIG. 6, the connecting device 100 further includes a fixing element 140, and the positioning element 121 is adapted to be connected to the plug terminal element 125 through the fixing element 140.

As shown in FIG. 5, the plug terminal element 125 includes a groove 126 corresponding to the fixing element 140, and the groove 126 includes an annular inner side wall 127. An outer surface 147 of the fixing element 140 has a first tooth structure B1, and the annular inner side wall 127 has a second tooth structure B2. When the fixing element 140 is disposed in the groove 126, the first tooth structure B1 meshes with the second tooth structure B2, and the fixing element 140 is fixed on the plug terminal element 125.

The first tooth structure B1 is disposed at two opposite ends of the fixing element 140, but the invention is not limited thereto. For example, in an embodiment that is not shown, the first tooth structure B1 may be disposed on the entire outer surface 147 of the fixing element 140.

The fixing element 140 further includes an inner surface 143, and the inner surface 143 has a first thread C1. The rod body 123 of the positioning element 121 has a second thread C2, and the second thread C2 is located on an end of the rod body 123 away from the limit portion 122a or 122b. When the positioning element 121 is connected to the plug terminal element 125, the rod body 123 passes through the elastic element 130a or 130b and extends into the fixing element 140 to be disposed in the groove 126, and the first thread C1 meshes with the second thread C2. In this way, the positioning element 121 is fixed on the plug terminal element 125 through the fixing element 140, and the plug terminal element 125 and the positioning element 121 may move together (as shown in FIG. 6).

In the embodiment, the connector 120 includes two positioning elements 121, two elastic elements 130a, 130b, and two fixing elements 140 disposed on two sides of the plug terminal element 125. The plug terminal element 125 includes two grooves 126. By means of in pairs of the positioning elements 121, in pairs of the elastic elements 130a, 130b, and in pairs of the fixing elements 140, the stability of an overall structure of the connector 120 may be improved. However, the arrangement method and quantity of the positioning elements 121, the elastic elements 130a, 130b, the fixing elements 140 and the grooves 126 are not limited thereto, and the users may design according to actual requirements.

In addition, as shown in FIG. 2, the connector 120 further includes a guide post 128, and the guide post 128 is adapted for guiding the connection between the portable electronic device and the connector 120. The guide post 128 protrudes from the plug terminal element 125, and an extending direction D3 of the guide post 128 is parallel to the central axis D1 of the connector 120. The guide post 128 has an inclined surface 129, and the inclined surface 129 is disposed at an end of the guide post 128 away from the plug terminal element 125. A ratio of a length of the inclined surface 129 in a direction perpendicular to the extending direction D3 to a length of the guide post 128 in a direction perpendicular to the extending direction D3 is less than two-thirds.

The inclined surface 129 of the guide post 128 is adapted for preventing from interference of the portable electronic device during a plugging process. For example, as shown in FIG. 2, when a left side of the upper housing 110a of the connecting device 100 has other structures, and the portable electronic device needs to be connected to the connector 120 obliquely in an upper-right lower-left manner, the inclined surface 129 of the guide post 128 may provide more space for the portable electronic device to prevent from interference. Hence, there is no interference structure between the guide post 128 and the portable electronic device, so that the portable electronic device may be obliquely connected to the connector 120 at various angles.

As shown in FIG. 6, the connector 120 includes two guide posts 128, and the two guide posts 128 are located on two opposite sides of the plug terminal element 125, and the two guide posts 128 and the two rod bodies 123 of the two positioning elements 121 are disposed coaxially, but the invention is not limited thereto. The ratio of the length of the inclined surface 129 in the direction perpendicular to the extending direction D3 to the length of the guide post 128 in the direction perpendicular to the extending direction D3 is, for example, one-half. The ratio of the length of the inclined surface 129 in the extending direction D3 to the length of the guide post 128 in the extending direction D3 is, for example, one-half.

In addition, as shown in FIG. 6, the connector 120 includes a transmission line E2, and the plug terminal element 125 includes a signal terminal assembly E1. The signal terminal assembly E1 is located between the two guide posts 128, and the transmission line E2 is connected to the signal terminal assembly E1. The signal terminal assembly E1 is adapted for receiving/outputting signals. The transmission line E2 is adapted for connecting with electronic components (not shown) inside the connecting device 100.

For example, the connecting device 100 may include a circuit board (not shown), and the transmission line E2 is connected to the circuit board. When the portable electronic device is connected to the connector 120, the portable electronic device may perform bidirectional signal transmission with the circuit board through the signal terminal assembly E1 and the transmission line E2. Certainly, the electronic component of the connecting device 100 is not limited thereto, and the connecting device 100 may further include a battery for powering the portable electronic device.

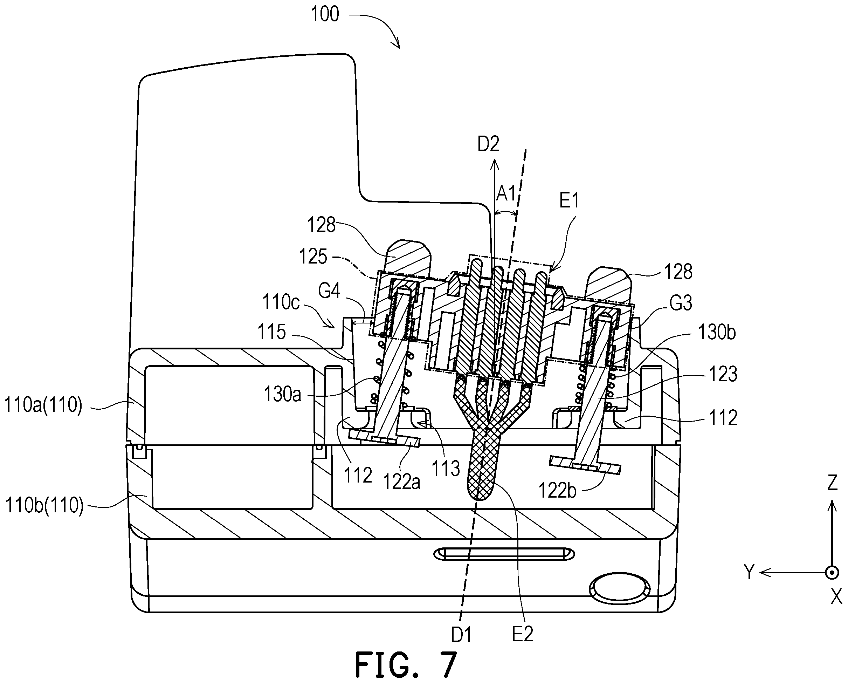

FIG. 7 to FIG. 10 respectively illustrate the plug terminal element of FIG. 1 in different skewed positions. Referring to FIG. 7 to FIG. 10, the plug terminal element 125 shown in FIG. 1 is pushed by different external forces and moves from the upright position to skewed positions relative to the bottom plate 112 shown in FIG. 7 to FIG. 10.

To be specific, as shown in FIG. 7, the plug terminal element 125 is pushed by an external force to make the plug terminal element 125 shifting to the right (i.e., -Y axis direction), and the gap G3 is smaller than the gap G4. The two positioning elements 121 are linked with the plug terminal element 125, a distance between the limit portion 122b and the bottom plate 112 is greater than a distance between the limit portion 122a and the bottom plate 112, and an elastic force accumulated in the elastic element 130b is greater than an elastic force accumulated in the elastic element 130a. An included angle A1 between the central axis D1 and the normal direction D2 is, for example, 15 degrees.

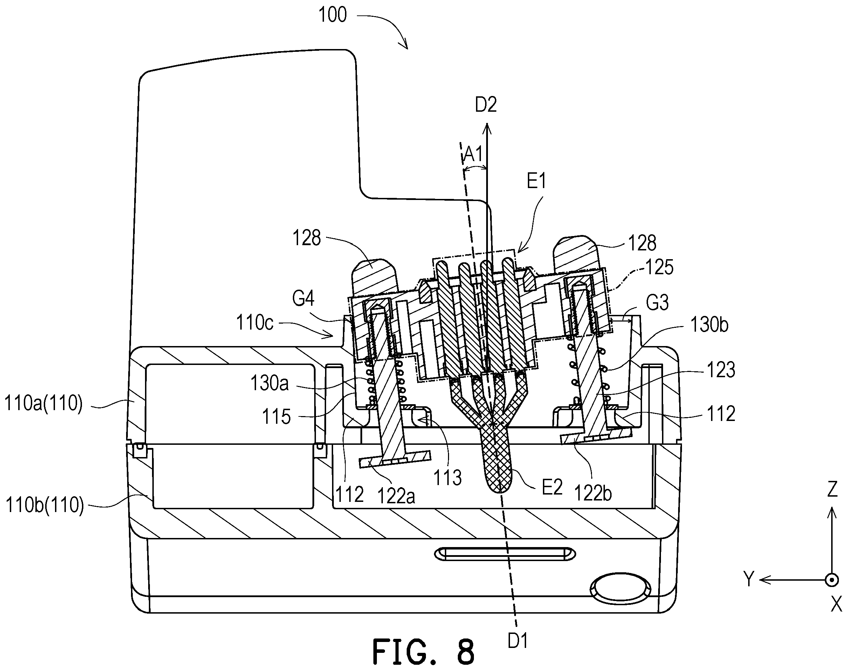

The plug terminal element 125 shown in FIG. 8 is pushed by an external force to make the plug terminal element 125 shifting to the left (i.e., +Y axis direction), and the gap G3 is larger than the gap G4. The distance between the limit portion 122a and the bottom plate 112 is greater than the distance between the limit portion 122b and the bottom plate 112, and the elastic force accumulated in the elastic element 130a is greater than the elastic force accumulated in the elastic element 130b.

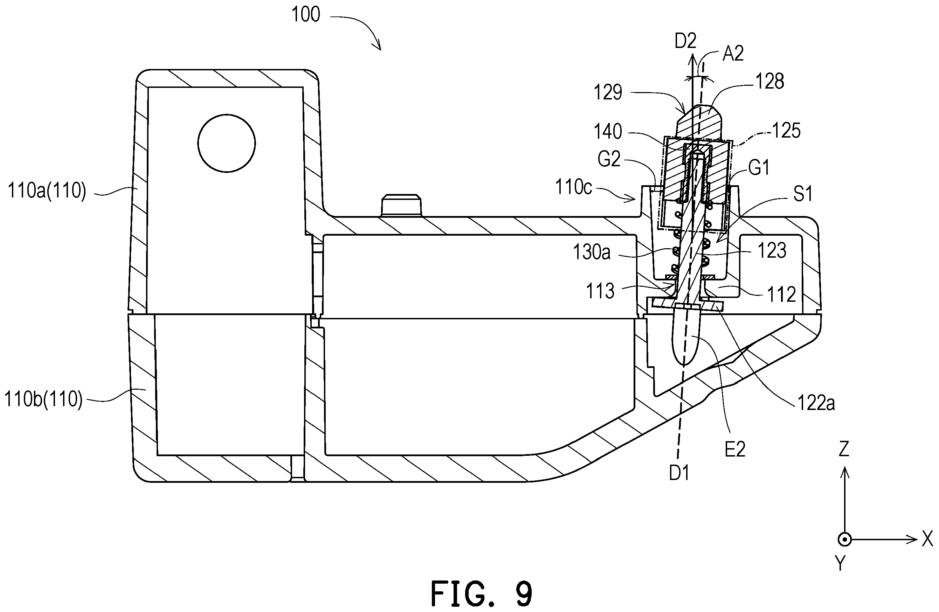

The plug terminal element 125 shown in FIG. 9 is pushed by an external force to make the plug terminal element 125 shifting forward (i.e., +X axis direction), and the gap G2 is greater than the gap G1. Only one positioning element 121 and one elastic element 130a are shown here. The positioning element 121 is shifted forward along with the plug terminal element 125. The distances between the two limit portions 122a, 122b and the bottom plate 112 are equal, and the elastic forces accumulated in the two elastic elements 130a, 130b are equal. An included angle A2 between the central axis D1 and the normal direction D2 is, for example, 15 degrees.

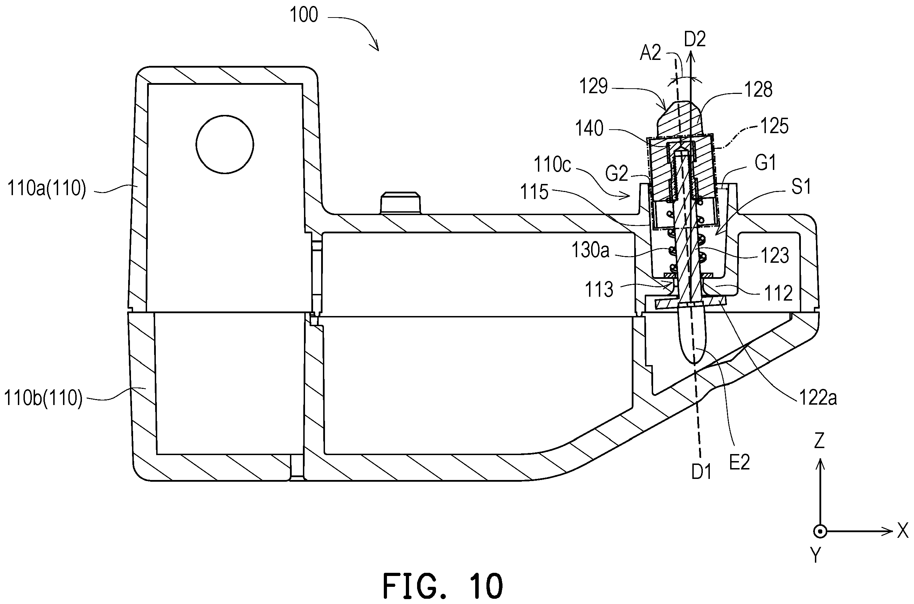

The plug terminal element 125 shown in FIG. 10 is pushed by an external force to make the plug terminal element 125 shifting backward (i.e., -X axis direction), and the gap G2 is smaller than the gap G1. Only one positioning element 121 and one elastic element 130a are shown here. The two positioning elements 121 are shifted backward along with the plug terminal element 125, the distances between the two limiting portions 122a, 122b and the bottom plate 112 are equal, and the elastic forces accumulated in the two elastic elements 130a, 130b are equal.

It may be seen that, when the plug terminal element 125 is in a skewed position, the intervals of the gaps G1, G2, G3, and G4 between the plug terminal element 125 and the side wall 115 are changed, and the two limit portions 122a, 122b move away from the bottom plate 112, and the two elastic elements 130a, 130b are deformed to accumulate elastic force. The included angle A1 or A2 is formed between the central axis D1 of the connector 120 and the normal direction D2, and the angle A1 or A2 is greater than or equal to zero degree and less than 20 degrees.

When the external force is disappeared, the elastic elements 130a, 130b restore, and the plug terminal element 125 returns to the upright position (as shown in FIG. 2 and FIG. 3) from the skewed positions (as shown in FIG. 7 to FIG. 10), and the limit portions 122a, 122b return to abut against the bottom plate 112.

The plug terminal element 125 of the embodiment may be shifted relative to the connector base 110c in response to the external forces in different directions, so that the plug terminal element 125 is not easily damaged due to pushing of the external force in different directions, and may provide multi-angle plugging. After the external force is removed, the position of the plug terminal element 125 may be automatically restored, so as to improve the convenience of using the connecting device 100.

It should be noted that the skewed positions of the plug terminal element 125 are not limited to the embodiments of FIG. 7 to FIG. 10. For example, in an embodiment that is not shown, the plug terminal element 125 may be subjected to a resultant force of the external forces shown in FIG. 8 and FIG. 9, and the plug terminal element 125 is shifted to the left (i.e., +Y axis direction) and forward (i.e., +X axis direction), but the invention is not limited thereto.

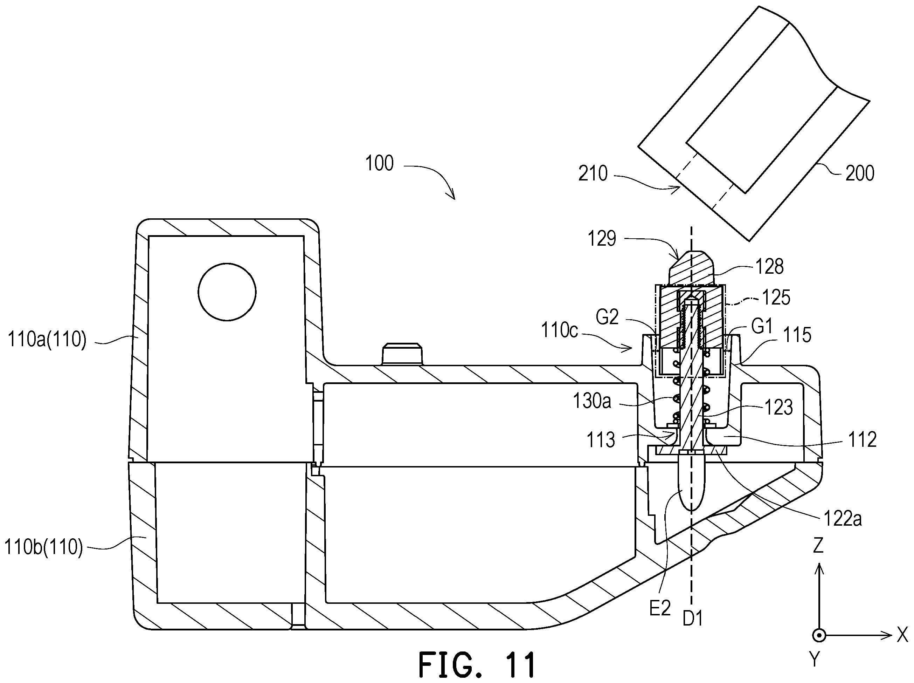

FIG. 11 to FIG. 13 illustrate a plugging process of a portable electronic device and the connecting device of FIG. 1. Referring to FIG. 11 to FIG. 13, a portable electronic device 200 has a guide hole 210 corresponding to the guide post 128 and a terminal hole (not shown) corresponding to the signal terminal assembly E1 (as shown in FIG. 6). When the portable electronic device 200 is not in contact with the connecting device 100 (as shown in FIG. 11), the plug terminal element 125 is not subjected to an external force and is in an upright position.

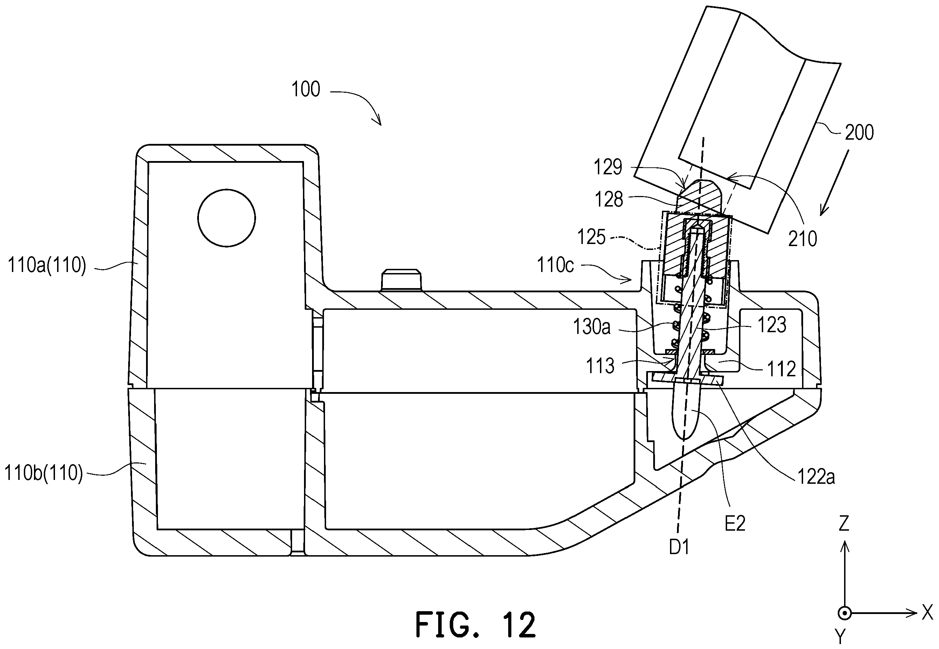

As shown in FIG. 12, when the portable electronic device 200 obliquely touches the plug terminal element 125 of the connecting device 100 in an upper-right lower-left manner, the plug terminal element 125 is subjected to an external force and shifted forward (i.e., +X axis direction) to be in a skewed position. At this time, the guide post 128 partially extends into the guide hole 210. The inclined surface 129 of the guide post 128 may ensure that when the portable electronic device 200 is inserted obliquely, the guide post 128 will not interfere with the guide hole 210. Therefore, the portable electronic device 200 may be connected to the plug terminal element 125 obliquely, so as to improve the convenience of plugging.

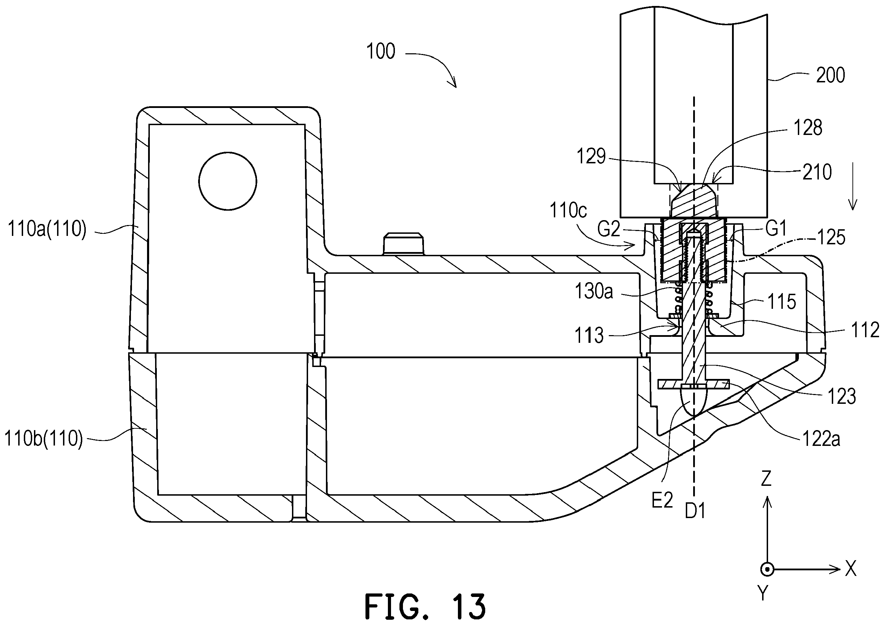

After the guide post 128 is inserted into the guide hole 210, the user may apply a force downwards (i.e., -Z axis direction), so that the plug terminal element 125 moves from the skewed position shown in FIG. 12 to a down-pressing position shown in FIG. 13. At this time, the gap G1 is equal to the gap G2, the distances between the two limit portions 122a, 122b and the bottom plate 112 are equal, and the elastic forces accumulated in the two elastic elements 130a, 130b are equal.

The plug terminal element 125 is further adapted to abut against the portable electronic device 200 through the elastic forces of the elastic elements 130a, 130b, so that the signal terminal assembly E1 as shown in FIG. 6 may be stably connected to the portable electronic device 200. When the external force is disappeared (i.e., the portable electronic device 200 is removed), the plug terminal element 125 returns to the upright position shown in FIG. 11 by the elastic forces of the two elastic elements 130a, 130b.

It may be seen that the portable electronic device 200 may be inserted into the plug terminal element 125 at multiple angles, the plug terminal element 125 is shifted along with an insertion direction of the portable electronic device 200, and the guide post 128 of the connector 120 guides the alignment between the portable electronic device 200 and the plug terminal element 125 to prevent the portable electronic device 200 and the plug terminal element 125 from being damaged due to misalignment. In this way, the portable electronic device 200 may be plugged into the connector 120 at various angles, and is not limited to a specific angle.

In summary, the connecting device of the present invention includes a housing, a connector and an elastic element. The housing includes a connector base, and a bottom plate and a side wall of the connector base jointly surround a space. The bottom plate includes a through hole. The connector is movably disposed on the connector base. The connector includes a plug terminal element and a positioning element, and the positioning element includes a rod body and a limit portion. The plug terminal element is exposed from the connector base, and the limit portion and the plug terminal element are located on two opposite sides of the bottom plate. The rod body is connected between the limit portion and the plug terminal element, so that the limit portion and the plug terminal element are linked. The size of the limit portion is larger than that of the corresponding through hole, so as to limit the movement of the limit portion. A gap is formed between the plug terminal element and the side wall, so that the plug terminal element may move relative to the side wall. When no external force is applied, the plug terminal element is in an upright position and the limit portion abuts against the bottom plate, and the elastic element may not be deformed. When the plug terminal element is pushed by the external force and is in the skewed position, the interval of the gap changes, the limit portion moves away from the bottom plate, and the elastic element is deformed to accumulate elastic force. When the external force is disappeared, the plug terminal element restores to the upright position, the limit portion returns to abut against the bottom plate, and the elastic element is not deformed. In this way, the plug terminal element may be switched between the upright position and the skewed positions, so that the connector is adapted for plugging and unplugging at various angles, so as to improve the convenience of using the connecting device.

The connector further includes a guide post disposed on the plug terminal element, and the guide post is adapted for guiding the connection between the portable electronic device and the connector. The portable electronic device includes a guide hole corresponding to the guide post. The guide post includes an inclined surface. When the portable electronic device contacts the connector obliquely and the guide post is inserted into the guide hole, the inclined surface of the guide post may ensure that the guide post does not interfere with the guide hole, so as to improve the smoothness of connection between the portable electronic device and the connector.

## Claims

1. A connecting device (100), comprising:
a housing (110), comprising a connector base (110c), and the connector base (110c) comprising a bottom plate (112) and a side wall (115) connected to the bottom plate (112), wherein the bottom plate (112) and the side wall (115) jointly surround a space (S1), and the bottom plate (112) comprises a through hole (113);
a connector (120), movably disposed at the connector base (110c), and partially located in the space (S1), wherein the connector (120) comprises a positioning element (121) and a plug terminal element (125) linked to the positioning element (121), the positioning element (121) passes through the through hole (113) and is connected to the plug terminal element (125), the plug terminal element (125) is exposed from the connector base (110c), and the positioning element (121) comprises a limit portion (122, 122b), the bottom plate (112) is located between the limit portion (122, 122b) and the plug terminal element (125), a size of the limit portion (122, 122b) is larger than a size of the corresponding through hole (113), and a gap (G1~G4) is formed between the plug terminal element (125) and the side wall (115); and
an elastic element (130a, 130b), abutting between the plug terminal element (125) and the bottom plate (112), wherein
when the plug terminal element (125) is pushed by an external force and moved to a skewed position relative to the bottom plate (112), an interval of the gap (G1~G4) changes, the limit portion (122, 122b) is moved away from the bottom plate (112), and the elastic element (130a, 130b) is deformed to accumulate an elastic force,
when the external force is disappeared, the elastic element (130a, 130b) restores, the limit portion (122, 122b) returns to abut against the bottom plate (112), and the plug terminal element (125) is located at an upright position relative to the bottom plate (112).

2. The connecting device (100) as claimed in claim 1, wherein when the plug terminal element (125) is in the upright position, a central axis (D1) of the connector (120) is parallel to a normal direction (D2) of the bottom plate (112), and when the plug terminal element (125) is in the skewed position, an included angle (A1,A2) is formed between the central axis (D1) of the connector (120) and the normal direction (D2), and the included angle (A1,A2) is greater than or equal to zero degree and less than 20 degrees.

3. The connecting device (100) as claimed in any one of claims 1-2, wherein the positioning element (121) further comprises a rod body (123) extending from the limit portion (122, 122b) of the positioning element (121), and the rod body (123) passes through the through hole (113) of the bottom plate (112) and is connected with the plug terminal element (125).

4. The connecting device (100) as claimed in claim 3. wherein the plug terminal element (125) comprises a groove (126), and the rod body (123) of the positioning element (121) extends into the groove (126) to be connected with the plug terminal element (125).

5. The connecting device (100) as claimed in claim 4, further comprising a fixing element (140), wherein the groove (126) comprises an annular inner side wall (127), an outer surface (147) of the fixing element (140) has a first tooth structure (B1), and the annular inner side wall (127) has a second tooth structure (B2) corresponding to the first tooth structure (B1), the fixing element (140) is disposed in the groove (126), and the first tooth structure (B1) meshes with the second tooth structure (B2).

6. The connecting device (100) as claimed in claim 5, wherein an inner surface (143) of the fixing element (140) has a first thread (C1), the rod body (123) has a second thread (C2) corresponding to the first thread (C1), and the second thread (C2) is disposed at an end of the rod body (123) away from the limit portion (122, 122b), the rod body (123) extends into the fixing element (140), and the first thread (C1) meshes with the second thread (C2).

7. The connecting device (100) as claimed in any one of claims 3-6, wherein the elastic element (130a, 130b) sleeves on the rod body (123) and abuts between the plug terminal element (125) and the bottom plate (112).

8. The connecting device (100) as claimed in any one of claim 3-7, wherein the connector (120) further comprises a guide post (128) protruding from the plug terminal element (125), and an extending direction (D3) of the guide post (128) is parallel to a central axis (D1) of the connector (120).

9. The connecting device (100) as claimed in claim 8, wherein the guide post (128) has an inclined surface (129), the inclined surface (129) is disposed on an end of the guide post (128) away from the plug terminal element (125), and a ratio of a length of the inclined surface (129) in a direction perpendicular to the extending direction (D3) to a length of the guide post (128) in a direction perpendicular to the extending direction (D3) is less than two-thirds.

10. The connecting device (100) as claimed in any one of claims 1-9, wherein the gap (G1~G4) is greater than zero and less than 5 mm.
